# EUROPEAN PATENT SPECIFICATION

(11) **EP 3 205 408 B1**
(45) Date of publication and mention of the grant of the patent: **04.09.2019**
(21) Application number: 16000514.6
(22) Date of filing: 03.03.2016
(51) Int. Cl.: B05D 3/12, B05D 7/14, B05D 7/00, C09D 5/00, B32B 15/08, B05D 5/06

(54) **METHOD OF MANUFACTURING COLOR STEEL SHEET HAVING POLISHED STAINLESS STEEL TEXTURE, AND COLOR STEEL SHEET MANUFACTURED BY THE METHOD**
VERFAHREN ZUR HERSTELLUNG EINES FARBIGEN STAHLBLECHES MIT POLIERTER EDELSTAHLTEXTUR UND DURCH DAS VERFAHREN HERGESTELLTES FARBIGES STAHLBLECH
PROCÉDÉ DE FABRICATION DE FEUILLE D'ACIER COLORÉE PRÉSENTANT UNE TEXTURE EN ACIER INOXYDABLE POLI ET FEUILLE D'ACIER DE COULEUR FABRIQUÉE PAR CE PROCÉDÉ

(30) Priority: 11.02.2016 KR 20160015481
(43) Date of publication of application: 16.08.2017
(73) Proprietor: AJU Steel Co., Ltd., Gyeongsangbuk-do (KR)
(72) Inventor: LEE, Hak Yeon, Gyeongsangbuk-do (KR)
(74) Representative: Henseler, Daniela

(56) References cited:
- JP-A- H08 257 492
- JP-A- 2006 124 824
- KR-A- 20070 025 223
- KR-B1- 101 510 555
- US-A1- 2006 147 745

## Description

### Technical Field

The present invention relates to a method of manufacturing a color steel sheet having a polished stainless steel texture, and a color steel sheet manufactured by the method. More particularly, the present invention pertains to a method of manufacturing a color steel sheet having a polished stainless steel texture by plating a metal layer on a steel sheet and polishing the metal layer with a brush roll and a belt to form clear and distinct hairlines, and a color steel sheet manufactured by the method.

### Background Art

KR 101 510 555 B1 describes a metal member in which the distinctness of image is excellent. The metal member includes a substrate, a plating layer and a transparent or translucent coating layer. The plating layer is formed on the steel substrate surface and has a hairline pattern on the superficial layer.

JP H08 257492 A relates to improving the adhesion of coating film and to stabilize punching durability by specifying a base material and each film in a precoated steel sheet wherein a metal film and next a primer coating film are formed and then a top coating film is formed as an uppermost layer, on a galvanizing steel sheet or an aluminum hot dipped steel sheet.

KR 2007 0025223 A describes a self-cleaning color coated steel plate for home appliance comprising a basic steel plate, a gilding layer of zinc or zinc alloy, a chromate or non-chromate pretreated layer, a lower way paint film layer of high polymer polyester and a self-cleaning upper way paint film layer.

In general, home appliances such as a refrigerator, a dishwasher, a microwave oven and the like are made from stainless steel in order to prevent generation of rust and corrosion

It is often the case that hairlines are formed on the surface of a stainless steel sheet for the manufacture of home appliances in an effort to obtain beautiful outward appearance. The hairlines are formed in the form of continuous lines like hairs by polishing the surface of a stainless steel sheet with a polishing belt or the like.

The stainless steel sheet having hairlines formed thereon is superior in corrosion resistance and is beautiful in outward appearance. Thus, the stainless steel sheet having hairlines formed thereon is widely used not only as a material for the manufacture of home appliances but also as an interior/exterior material of buildings.

However, the stainless steel sheet is more expensive than a general steel sheet and is vulnerable to fingerprints and stains. As a solution to this problem, there has been proposed a method of forming a plating layer on a steel sheet rather than a stainless steel sheet, forming hairlines on the plating layer and painting the steel sheet.

According to the conventional method, there is posed a problem in that, if painting is performed on the surface of the plating layer having hairlines, the form of the hairlines becomes unclear. This makes it difficult to realize a polished stainless steel texture. Another problem of the conventional method resides in that the adhesion of a paint film is reduced in the hairlines of the plating layer.

Furthermore, there has been proposed a method of attaching a film having hairlines to the surface of a steel sheet instead of directly forming hairlines on the surface of the steel sheet. In the case, however, a problem is posed in that, due to the limit of a printed pattern, the outward appearance of the steel sheet is not beautiful and the tree-dimensional hairlines are hard to realize.

### Summary of the Invention

In view of the aforementioned problems, it is an object of the present invention to provide a method of manufacturing a color steel sheet according to claim 1 having a polished stainless steel texture, which is capable of realizing a texture similar to polished stainless steel texture while using a general steel sheet, and a color steel sheet manufactured by the method.

Another object of the present invention is to provide a method of manufacturing a color steel sheet having a polished stainless steel texture, which is capable of forming clear and distinct hairlines while reducing the thickness of a plating layer, and a color steel sheet manufactured by the method.

A further object of the present invention is to provide a method of manufacturing a color steel sheet having a polished stainless steel texture, which is capable of enhancing the adhesion of a paint film to the surface of a plating layer having hairlines and capable of improving the beauty of the color steel sheet, and a color steel sheet manufactured by the method.

A still further object of the present invention is to provide a method of manufacturing a color steel sheet having a polished stainless steel texture, which is capable of improving corrosion resistance and glossiness of the color steel sheet and consequently enhancing marketability of the color steel sheet, and a color steel sheet manufactured by the method.

In order to achieve the above objects, there is provided a method of manufacturing a color steel sheet according to claim 1 having a polished stainless steel texture, including: (a) a step of forming a plating layer on a front surface of a steel sheet material; (b) a step of polishing the plating layer; (c) a step of forming a pretreatment layer on the polished plating layer;(d) a step of forming a top coating layer on the pretreatment layer; and (e) a step of forming a back coating layer on a rear surface of the steel sheet material, wherein the step of polishing the plating layer includes a first polishing step of primarily polishing the plating layer with a brush roll to form thick and short patterns in the plating layer, and a second polishing step of secondarily polishing the plating layer with a belt to form thin and long hairlines in the plating layer, the plating layer is polished so that roughness Ra of the plating layer becomes 0.2 to 0.6 after the first polishing step, and a ratio of 60-degree glossiness in the hairline direction to the 60-degree glossiness in the direction perpendicular to the hairline direction is equal or larger than 2 after the second polishing step, and the top coating layer is formed by a paint composition containing 25 to 35 wt% of an A-type resin which is a high-polymer resin, 20 to 30 wt% of a B-type resin which is larger in weight-average molecular weight and higher in glass transition temperature than the A-type resin, 10 to 30 wt% of a solvent, 5 to 15 wt% of an anticorrosive paste, 1 to 10 wt% of a coloring paste, 0.5 to 2 wt% of wax and 0.5 to 1 wt% of acryl beads, on the basis of a total weight of the paint composition, wherein the A-type resin has a weight-average molecular weight of 15,000 to 20,000 and a glass transition temperature of 3 to 8°C, and the B-type resin has a weight-average molecular weight of 20,000 to 25,000 and a glass transition temperature of 60 to 70°C.

In the method described above, the A-type resin has a weight-average molecular weight of 15,000 to 20,000 and a glass transition temperature of 3 to 8 °C, and the B-type resin has a weight-average molecular weight of 20,000 to 25,000 and a glass transition temperature of 60 to 70°C.

In the method described above, an amount of metal contained in the plating layer before the first polishing step may be 30 to 40 g/m², and an amount of metal contained in the plating layer after the second polishing step may be 15 to 20 g/m².

In the method described above, the plating layer may be a zinc layer.

In the method described above, the plating layer may be a zinc-nickel alloy layer.

In the method described above, the pretreatment layer may be formed using non-chromate paint mainly composed of titanium, and a coating amount of the pretreatment layer may be 20 to 100 mg/m².

In the method described above, the top coating layer may have a thickness of 12 to 18 *µ*m.

In the method described above, the back coating layer may be formed by epoxy-based paint.

Furthermore, there is provided a color steel sheet manufactured by the method described above.

According to the present invention, it is possible to realize a texture similar to a polished stainless steel texture while using a general steel sheet.

Furthermore, it is possible to form clear and distinct hairlines while reducing the thickness of a plating layer.

Furthermore, it is possible to enhance the adhesion of a paint film to the surface of a plating layer having hairlines and to improve the beauty of the color steel sheet.

Furthermore, it is possible to improve corrosion resistance and glossiness of the color steel sheet and to enhance marketability of the color steel sheet.

### Brief Description of the Drawings

The above and other objects and features of the present invention will become apparent from the following description of preferred embodiments given in conjunction with the accompanying drawings.
Fig. 1 is a view schematically illustrating a process of manufacturing a color steel sheet according to one embodiment of the present invention.
Fig. 2 is a photograph of a brush roll used for primary polishing in the process of manufacturing a color steel sheet.
Fig. 3 is a photograph showing a plating layer subjected to primary polishing in the process of manufacturing a color steel sheet.
Fig. 4 is a photograph showing a plating layer subjected to secondary polishing in the process of manufacturing a color steel sheet.
Fig. 5 is a photograph showing a final product having a silver top coating layer formed in the process of manufacturing a color steel sheet.

### Detailed Description of Preferred Embodiments

Preferred embodiments of the present invention will now be described in detail with reference to the accompanying drawings.

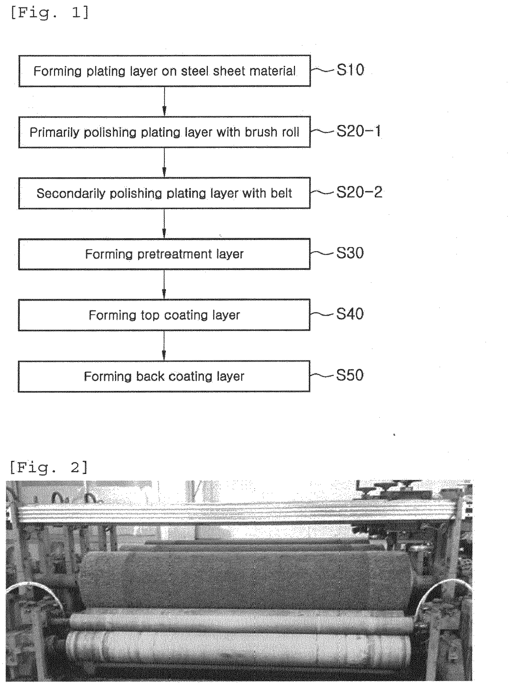

Referring to Fig. 1, the method of manufacturing a color steel sheet having a polished stainless steel texture according to one embodiment of the present invention includes (a) a step of forming a plating layer on a front surface of a steel sheet material (S10), (b) a step of polishing the plating layer (S20), (c) a step of forming a pretreatment layer on the polished plating layer (S30), (d) a step of forming a top coating layer on the pretreatment layer (S40), and (e) a step of forming a back coating layer on a rear surface of the steel sheet material (S50).

The plating layer may be, but is not limited to, a zinc layer or a zinc-nickel alloy layer. In the case where the plating layer is a zinc-nickel alloy layer, the content of nickel in the plating layer may be 7 to 12%. The amount of metal contained in the plating layer before the first polishing step may be 30 to 40 g/m² and the amount of metal contained in the plating layer after the second polishing step may be 15 to 20 g/m².

The price of a final product becomes higher as the thickness of the plating layer grows larger. Thus, it is preferred that the plating layer is formed as thin as possible and further that the polishing amount of the plating layer is as small as possible.

In view of the foregoing, the step of polishing the plating layer (S20) includes a first polishing step of primarily polishing the plating layer with a brush roll to form thick and short patterns in the plating layer (S20-1), and a second polishing step of secondarily polishing the plating layer with a belt to form thin and long hairlines in the plating layer (S20-2). This makes it possible to form clear and distinct hairlines while minimizing the polishing amount of the plating layer.

After going through the first polishing step, the roughness Ra of the plating layer may be 0.2 to 0.6. After going through the second polishing step, the 60-degree glossiness of the plating layer in a direction parallel to the hairlines may be 200 to 250% and the horizontal-to-vertical ratio of the hairlines may be 2.0 to 4.0.

If the polishing of the plating layer is finished, the surface of the plating layer is cleaned and the pretreatment layer is formed on the plating layer. The pretreatment layer is formed using non-chromate paint mainly composed of titanium. The coating amount of the pretreatment layer may be 20 to 100 mg/m². If the coating amount of the pretreatment layer is smaller than 20 mg/m² or larger than 100 mg/m², the adhesion of the top coating layer is impaired.

The top coating layer is formed by a paint composition containing 25 to 35 wt% of an A-type resin which is a high-polymer resin, 20 to 30 wt% of a B-type resin which is larger in weight-average molecular weight and higher in glass transition temperature than the A-type resin, 10 to 30 wt% of a solvent, 5 to 15 wt% of an anticorrosive paste, 1 to 10 wt% of a coloring paste, 0.5 to 2 wt% of wax and 0.5 to 1 wt% of acryl beads, on the basis of a total weight of the paint composition.

The A-type resin has a weight-average molecular weight Mw of 15,000 to 20,000 and a glass transition temperature Tg of 3 to 8 °C. The B-type resin has a weight-average molecular weight Mw of 20,000 to 25,000 and a glass transition temperature Tg of 60 to 70°C.

The A-type resin having an extremely low glass transition temperature may improve flexibility of the top coating layer. The B-type resin having an extremely high glass transition temperature may improve hardness and chemical resistance of the top coating layer. If the mixture of the A-type resin and the B-type resin is used as the top coating layer, it is possible to secure the flexibility and hardness of the top coating layer.

A ketone-based solvent or an ester-based solvent may be used as the solvent. A silicon dioxide may be used as the anticorrosive paste. Polyethylene wax may be used as the wax.

The top coating layer may have a small thickness of 12 to 18 *µ*m so that the hairlines are clearly visible. If the thickness of the top coating layer is smaller than 12 *µ*m, there is a possibility that the corrosion resistance of the top coating layer is reduced. If the thickness of the top coating layer is larger than 18 *µ*m, the outward appearance of the top coating layer is impaired and the marketability of a final product is reduced.

The top coating layer may have hairline-direction 60-degree glossiness of 60 to 90%. If the hairline-direction 60-degree glossiness is smaller than 60%, the surface of the top coating layer may look hazy. If the hairline-direction 60-degree glossiness is larger than 90%, the surface hardness of the top coating layer may be reduced and the top coating layer may be vulnerable to a shipping pressure.

The back coating layer may be formed by coating an epoxy-based paint.

A process of manufacturing a color steel sheet having a polished stainless steel texture according to one embodiment of the present invention will now be described with reference to Fig. 1.

First, a steel sheet material is prepared and a plating layer such as a zinc layer or a zinc-nickel alloy layer is formed in an amount of 30 to 40 g/m² on the surface of the steel sheet material (S10).

Then, the plating layer is primarily polished with a brush roll so that thick and short patterns are formed in the plating layer (S20-1). The plating layer is secondarily polished with a belt to form thin and long hairlines in the plating layer (S20-2). This makes it possible to form clear and distinct hairlines while minimizing the polishing amount of the plating layer.

After the polishing is finished, the surface of the plating layer is cleaned. Thereafter, a pretreatment layer is formed on the plating layer in an amount of 20 to 100 mg/m² by using non-chromate paint mainly composed of titanium (S30).

Next, a top coating layer is formed on the pretreatment layer at a thickness of 12 to 18 *µ*m by using top coating layer paint (S40).

Finally, a back coating layer is formed on the rear surface of the steel sheet material by using epoxy-based paint (S50). Thus, the manufacture of a color steel sheet according to the present invention is completed.

Descriptions will now be made on examples and test results.

A zinc-nickel plating layer containing 11% of nickel was formed on a cold-rolled steel sheet. Then, the plating layer was primarily wet-polished with a brush roll so that the plating layer has an average roughness Ra of 0.2 to 0.6.

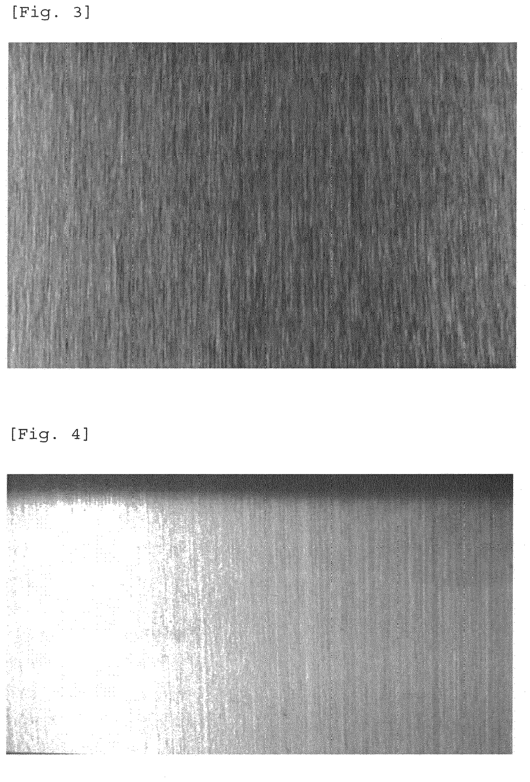

A Scotch Brite brush roll illustrated in Fig. 2 was used in the primary wet polishing. Fig. 3 is a photograph showing the plating layer having thick and short patterns formed by the primary wet polishing.

Then, the plating layer was secondarily polished by allowing the steel sheet material having the plating layer to pass through three belts (e.g., #320 sandpaper belts) disposed in an end-to-end relationship. At this time, the revolution number of a belt polisher was set at 1,800 to 2,000 rpm. Fig. 4 is a photograph showing a plating layer having thin and long hairlines formed by the secondary polishing.

Then, the plating layer was cleaned and a pretreatment layer was formed on the plating layer. Thereafter, a top coating layer was formed at a thickness of 17 *µ*m without coating a primer. In one embodiment of the present invention, special top coating paint is used to form the top coating layer. This makes it possible to directly form the top coating layer on the pretreatment layer without having to coat a primer.

It is also possible to form clearly-visible hairlines on the plating layer while reducing the thickness of the plating layer which is expensive to form. This makes it possible to realize a texture similar to a polished stainless steel texture while using a general steel sheet material.

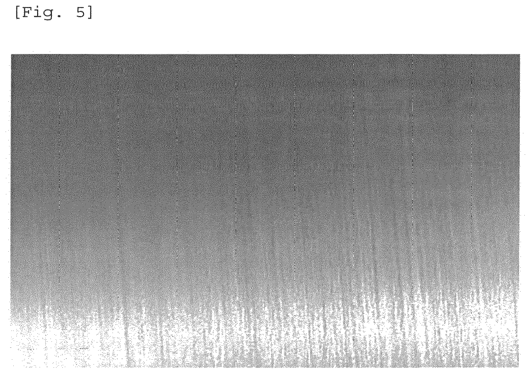

Fig. 5 is a photograph showing a final product having a silver top coating layer. It can be confirmed that thin and long hairlines are clearly formed.

Table 1 shown below indicates the color-by-color roughness of the top coating layer, the 60-degree glossiness in the hairline direction, the 60-degree glossiness in the direction perpendicular to the hairlines, and the ratio of the glossiness in the hairline direction to the glossiness in the direction perpendicular to the hairlines

If the ratio of the glossiness in the hairline direction to the glossiness in the direction perpendicular to the hairline direction is equal to or larger than 2, it is possible to obtain a texture similar to a polished stainless steel texture. In the examples shown in Table 1 below, the ratio is 3.2 to 3.7.

**[Table 1]**

| | Color | Roughness | 60° glossiness in hairline direction | 60° glossiness in direction perpendicular to hairline | Ratio of glossiness in hairline direction to glossiness in direction perpendicular to hairline |
|---|---|---|---|---|---|
| Example 1 | Light silver | 0.30 | 293% | 81% | 3.6 |
| Example 2 | Dark silver | 0.35 | 257% | 70% | 3.7 |
| Example 3 | Champagne gold | 0.38 | 256% | 75% | 3.4 |
| Example 4 | Space black | 0.34 | 282% | 86% | 3.3 |
| Example 5 | Espresso brown | 0.35 | 296% | 92% | 3.2 |

Table 2 shown below indicates the test results of physical properties of a color steel sheet manufactured by the aforementioned method.

The machinability was evaluated by observing the presence or absence of a crack in the color steel sheet which is bent 180 degrees with no gap by a vise. No crack was observed in the color steel sheets of examples 1 to 5.

The Erichsen 6 mm test was performed by making matrix cuts of 11×11 (with intervals of 1 mm) in the color steel sheet, pushing up the color steel sheet by about 6 mm with a pressing ball, affixing a 3M Scotch tape to the color steel sheet and releasing the 3M Scotch tape from the color steel sheet. If no peeling-off occurs in 100 cells, the result of the Erichsen 6 mm test was indicated to read "100/100". According to the result of the Erichsen 6 mm test, no peeling-off occurred in in the color steel sheets of examples 1 to 5.

The pencil hardness test was performed by pressing a Mitsubishi HB pencil against the color steel sheet with a force of 500 g along five lines. If flaws are generated in two or less lines, the result of the pencil hardness test was indicated to read "HB".

The salt spray test was performed according to KS-C-0223. If white color rust or red color rust is not generated on the surface of the color steel sheet after 10 days (240 hours) and if a surface blister of 2 mm or less is generated around an X cut, the result of the salt spray test was indicated to read "Good". If white color rust or red color rust is generated or if a surface blister of larger than 2 mm is generated, the result of the salt spray test was regarded as no good.

**[Table 2]**

| | Color | 60° glossiness in hairline direction | Machinability | Erichsen 6 mm test | Pencil hardness test | Salt spray test |
|---|---|---|---|---|---|---|
| Example 1 | Light silver | 80% | No crack | 100/100 | HB | Good |
| Example 2 | Dark silver | 75% | No crack | 100/100 | HB | Good |
| Example 3 | Champagne gold | 85% | No crack | 100/100 | HB | Good |
| Example 4 | Space black | 72% | No crack | 100/100 | HB | Good |
| Example 5 | Espresso brown | 78% | No crack | 100/100 | HB | Good |

According to the present invention described above, the thick and short patterns are primarily formed in the plating layer by the brush roll and, then, the thin and long hairlines are secondarily formed in the plating layer by the belt. It is therefore possible to form clear and distinct hairlines.

It is also possible to form clear hairlines while reducing the polishing amount of the plating layer. This makes it possible to form the plating layer at a reduced thickness.

Furthermore, when forming the top coating layer, the mixture of the A-type resin and the B-type resin is directly coated without coating a primer. This makes it possible to allow the hairlines to become easily visible.

Accordingly, it is possible to realize a texture similar to a polished stainless steel texture while using a general steel sheet.

Furthermore, according to the color steel sheet manufactured by the aforementioned method, it is possible to enhance the adhesion of a paint film to the surface of a plating layer having hairlines and to improve the beauty of the color steel sheet.

In addition, it is possible to improve corrosion resistance and glossiness of the color steel sheet and to enhance marketability of the color steel sheet.

While a preferred embodiment of the present invention have been described above, the present invention is not limited to this embodiment. It is to be understood that various changes and modifications may be made without departing from the scope of the invention defined in the claims.

## Claims

1. A method of manufacturing a color steel sheet having a polished stainless steel texture, **characterized by** comprising:
(a) a step of forming a plating layer on a front surface of a steel sheet material (S10);
(b) a step of polishing the plating layer (S20);
(c) a step of forming a pretreatment layer on the polished plating layer (S30);
(d) a step of forming a top coating layer on the pretreatment layer (S40); and
(e) a step of forming a back coating layer on a rear surface of the steel sheet material (S50),
wherein the step of polishing the plating layer (S20) includes a first polishing step of primarily polishing the plating layer with a brush roll to form thick and short patterns in the plating layer (S20-1), and a second polishing step of secondarily polishing the plating layer with a belt to form thin and long hairlines in the plating layer (S20-2),
the plating layer is polished so that roughness Ra of the plating layer becomes 0.2 to 0.6 after the first polishing step, and a ratio of the 60-degree glossiness in the hairline direction to the 60-degree glossiness in the direction perpendicular to the hairline direction is equal or larger than 2 after the second polishing step, and
the top coating layer is formed by a paint composition containing 25 to 35 wt% of an A-type resin which is a high-polymer resin, 20 to 30 wt% of a B-type resin which is larger in weight-average molecular weight and higher in glass transition temperature than the A-type resin, 10 to 30 wt% of a solvent, 5 to 15 wt% of an anticorrosive paste, 1 to 10 wt% of a coloring paste, 0.5 to 2 wt% of wax and 0.5 to 1 wt% of acryl beads, on the basis of a total weight of the paint composition, wherein
the A-type resin has a weight-average molecular weight of 15,000 to 20,000 and a glass transition temperature of 3 to 8°C, and the B-type resin has a weight-average molecular weight of 20,000 to 25,000 and a glass transition temperature of 60 to 70°C.

2. The method of claim 1, **characterized in that** an amount of metal contained in the plating layer before the first polishing step is 30 to 40 g/m² and an amount of metal contained in the plating layer after the second polishing step is 15 to 20 g/m².

3. The method of claim 1, **characterized in that** the plating layer is a zinc layer.

4. The method of claim 1, **characterized in that** the plating layer is a zinc-nickel alloy layer.

5. The method of claim 1, **characterized in that** the pretreatment layer is formed using non-chromate paint mainly composed of titanium, and a coating amount of the pretreatment layer is 20 to 100 mg/m².

6. The method of claim 1, **characterized in that** the top coating layer has a thickness of 12 to 18 *µ*m.

7. The method of claim 1, **characterized in that** the back coating layer is formed by epoxy-based paint.

8. A color steel sheet manufactured by the method of any one of claims 1 to 7.

## Patentansprüche

1. Verfahren zum Herstellen eines Farbstahlblechs mit einer polierten Edelstahltextur, **dadurch gekennzeichnet, dass** es umfasst:
(a) einen Schritt zum Bilden einer Plattierungsschicht auf einer Vorderseite eines Stahlblechmaterials (S10);
(b) einen Schritt zum Polieren der Plattierungsschicht (S20);
(c) einen Schritt zum Bilden einer Vorbehandlungsschicht auf der polierten Plattierungsschicht (S30);
(d) einen Schritt zum Bilden einer Deckschicht auf der Vorbehandlungsschicht (S40) und
(e) einen Schritt zum Bilden einer Rückseitenbeschichtung auf einer Rückseite des Stahlblechmaterials (S50), wobei
der Schritt zum Polieren der Plattierungsschicht (S20) einen ersten Polierschritt des primären Polierens der Plattierungsschicht mit einer Bürstenwalze, um dicke und kurze Muster in der Plattierungsschicht (S20-1) zu bilden, und einen zweiten Polierschritt des sekundären Polierens der Plattierungsschicht mit einem Band, um dünne und lange Haarlinien in der Plattierungsschicht (S20-2) zu bilden, enthält,
die Plattierungsschicht derart poliert wird, dass die Rauheit Ra der Plattierungsschicht nach dem ersten Polierschritt im Bereich von 0,2 bis 0,6 liegt und ein Verhältnis des Glanzes bei 60 Grad in der Haarlinienrichtung zum Glanz bei 60 Grad in der Richtung senkrecht zur Haarlinienrichtung nach dem zweiten Polierschritt gleich oder größer 2 ist, und
die Deckschicht durch eine Farbzusammensetzung gebildet ist, die im Bereich von 25 bis 35 Gew.-% eines Harzes des A-Typs, das ein Hochpolymerharz ist, im Bereich von 20 bis 30 Gew.-% eines Harzes des B-Typs, das im mittleren Gewichtsmolekulargewicht größer und in der Glasübergangstemperatur höher als das Harz des A-Typs ist, im Bereich von 10 bis 30 Gew.-% eines Lösungsmittels, im Bereich von 5 bis 15 Gew.-% einer antikorrosiven Paste, im Bereich von 1 bis 10 Gew.-% einer Farbpaste, im Bereich von 0,5 bis 2 Gew.-% von Wachs und im Bereich von 0,5 bis 1 Gew.-% von Acrylkügelchen auf der Grundlage eines Gesamtgewichts der Farbzusammensetzung enthält, wobei
das Harz des A-Typs ein Gewichtsmittel des Molukulargewichts von 15.000 bis 20.000 und eine Glasübergangstemperatur von 3 bis 8°C besitzt und das Harz des B-Typs ein Gewichtsmittel des Molukulargewichts 20.000 bis 25.000 und eine Glasübergangstemperatur von 60 bis 70°C besitzt.

2. Verfahren nach Anspruch 1, **dadurch gekennzeichnet, dass** eine Menge an Metall, die vor dem ersten Polierschritt in der Plattierungsschicht enthalten ist, im Bereich von 30 bis 40 g/m² liegt und eine Menge an Metall, die nach dem zweiten Polierschritt in der Plattierungsschicht enthalten ist, im Bereich von 15 bis 20 g/m² liegt.

3. Verfahren nach Anspruch 1, **dadurch gekennzeichnet, dass** die Plattierungsschicht eine Zinkschicht ist.

4. Verfahren nach Anspruch 1, **dadurch gekennzeichnet, dass** die Plattierungsschicht eine Zink-Nickel-Legierungsschicht ist.

5. Verfahren nach Anspruch 1, **dadurch gekennzeichnet, dass** die Vorbehandlungsschicht unter Verwendung einer chromatfreien Farbe, die hauptsächlich aus Titan besteht, gebildet ist und eine Beschichtungsmenge der Vorbehandlungsschicht im Bereich von 20 bis 100 mg/m² liegt.

6. Verfahren nach Anspruch 1, **dadurch gekennzeichnet, dass** die Deckschicht eine Dicke im Bereich von 12 bis 18 µm besitzt.

7. Verfahren nach Anspruch 1, **dadurch gekennzeichnet, dass** die Rückseitenbeschichtungsschicht durch eine Farbe auf Epoxidbasis gebildet ist.

8. Farbstahlblech, das durch das Verfahren nach einem der Ansprüche 1 bis 7 hergestellt wurde.

## Revendications

1. Procédé de fabrication d'une feuille d'acier colorée ayant une texture en acier inoxydable poli, **caractérisé en ce qu'**il comprend:
(a) une étape de formation d'une couche de placage sur une surface avant d'un matériau de feuille d'acier (S10);
(b) une étape de polissage de la couche de placage (S20);
(c) une étape de formation d'une couche de prétraitement sur la couche de placage polie (S30);
(d) une étape de formation d'une couche de revêtement supérieur sur la couche de prétraitement (S40); et
(e) une étape de formation d'une couche de revêtement arrière sur une surface arrière du matériau de feuille d'acier (S50),
dans lequel l'étape de polissage de la couche de placage (S20) inclut une première étape de polissage comprenant le polissage primaire de la couche de placage avec un cylindre brosseur pour former des motifs épais et courts dans la couche de placage (S20-1), et une seconde étape de polissage comprenant un polissage secondaire de la couche de placage avec une courroie pour former des traits fins et longs dans la couche de placage (S20-2),
la couche de placage est polie de façon que la rugosité Ra de la couche de placage soit de 0,2 à 0,6 après la première étape de polissage, et un rapport entre la brillance à 60 degrés dans la direction des traits et la brillance à 60 degrés dans la direction perpendiculaire à la direction des traits est supérieur ou égal à 2 après la seconde étape de polissage, et
la couche de revêtement supérieur est formée par une composition de peinture contenant 25 à 35 % en poids d'une résine de type A qui est une résine de haut polymère, 20 à 30 % en poids d'une résine de type B dont le poids moléculaire moyen en poids et la température de transition vitreuse sont supérieurs à ceux de la résine de type A, 10 à 30 % en poids d'un solvant, 5 à 15 % en poids d'une pâte anticorrosion, 1 à 10 % en poids d'une pâte colorante, 0,5 à 2 % en poids d'une cire et 0,5 à 1 % en poids de billes acryliques, sur la base d'un poids total de la composition de peinture, dans lequel
la résine de type A présente un poids moléculaire moyen en poids de 15.000 à 20.000 et une température de transition vitreuse de 3 à 8°C, et la résine de type B présente un poids moléculaire moyen en poids de 20.000 à 25.000 et une température de transition vitreuse de 60 à 70°C.

2. Procédé selon la revendication 1, **caractérisé en ce qu'**une quantité de métal contenue dans la couche de placage avant la première étape de polissage est de 30 à 40 g/m² et une quantité de métal contenue dans la couche de placage après la seconde étape de polissage est de 15 à 20 g/m².

3. Procédé selon la revendication 1, **caractérisé en ce que** la couche de placage est une couche de zinc.

4. Procédé selon la revendication 1, **caractérisé en ce que** la couche de placage est une couche d'alliage de zinc-nickel.

5. Procédé selon la revendication 1, **caractérisé en ce que** la couche de prétraitement est formée en utilisant une peinture sans chromate principalement composée de titane, et une quantité de revêtement de la couche de prétraitement est de 20 à 100 mg/m².

6. Procédé selon la revendication 1, **caractérisé en ce que** la couche de revêtement supérieur présente une épaisseur de 12 à 18 µm.

7. Procédé selon la revendication 1, **caractérisé en ce que** la couche de revêtement arrière est formée par une peinture à base d'époxy.

8. Feuille d'acier colorée fabriquée par le procédé selon l'une quelconque des revendications 1 à 7.
